# DEMANDE DE BREVET EUROPEEN

(11) **EP 2 544 432 A1**
(43) Date de publication de la demande: **09.01.2013**
(21) Numéro de dépôt: 11305862.2
(22) Date de dépôt: 05.07.2011
(51) Int. Cl.: H04M 1/725, H04B 13/00

(54) **Système de transmission de données entre un terminal de télécommunication et un élément sécurisé déporté**

(71) Demandeur: Gemalto SA, 92190 Meudon (FR)
(72) Inventeur: Fine, Jean-Yves, 13010 Marseille (FR); Buton, Christophe, 13420 Gemenos (FR)

(57) **Abrégé**

L'invention concerne un système de transmission de données entre un terminal de télécommunication 10 et un élément sécurisé déporté 17.

Selon l'invention, le système comprend une interface apte à établir une communication de type UWB entre le terminal 10 et l'élément sécurisé 17.

## Description

Le domaine de l'invention est celui des télécommunications. Plus précisément, la présente invention concerne un système de transmission de données entre d'une part un terminal de télécommunication, tel qu'un téléphone mobile, un PDA (Personal Digital Assistant) ou un ordinateur par exemple, et d'autre part un élément sécurisé déporté.

On entend par élément sécurisé une carte Sim, Usim ou un UICC, voire un eUICC (embedded UICC), destiné à coopérer avec le terminal. Un élément sécurisé selon la présente invention répond aux standards de l'ETSI.

De manière connue, l'élément sécurisé comporte des éléments (clés, répertoires, logiciels, fichiers,...) permettant à l'utilisateur du terminal de s'identifier auprès d'un réseau de télécommunications, généralement cellulaire, et d'établir des communications.

On entend également par eUICC, ou MIM dans le domaine des communications entre machines, ce domaine étant encore appelé M2M, un élément sécurisé de type UICC qui ne se présente pas sous la forme d'une carte pouvant être extraite du terminal, mais qui se présente sous la forme d'une puce solidaire (soudée) d'un élément et comprenant toutes les fonctionnalités d'un UICC.

Dans le cadre de la présente invention, on entend par élément sécurisé déporté un élément sécurisé qui n'est pas présent ou physiquement relié au terminal, mais qui communique par voie radio avec ce terminal. Dans un mode de réalisation particulier, l'élément sécurisé peut par exemple être incorporé dans un appareil porté par l'utilisateur du terminal et communiquer par Bluetooth ou Wifi avec le terminal. On remplace ainsi un système classique de terminal mobile comportant une carte UICC par un terminal ne comportant pas de carte UICC mais communiquant avec cette carte (ou un eUICC) distante de quelques dizaines de centimètres à quelques mètres. L'avantage de cette solution est que le terminal ne comporte plus d'identifiant de l'abonné et qu'il peut être prêté à toute personne désireuse de s'en servir. De plus, comme toutes les données personnelles précieuses à l'utilisateur, comme son agenda, son répertoire téléphonique, ses photos,... sont compris dans son élément sécurisé qu'il détient avec lui, un vol ou une perte de son terminal ne représente qu'un préjudice mineur, comparé à la perte ou du vol de son terminal comprenant ses données personnelles.

On connaît par ailleurs un système de transmission ingénieux appelé eGo. Un tel système est décrit sur le site http://www.ego-project.eu et dans le brevet EP-1.695.296.

Un système eGo est composé de deux éléments : un premier élément est compris dans un élément à commander. Il peut s'agir d'une souris d'un ordinateur, d'un téléphone portable, d'une porte de maison ou de voiture, etc... Le deuxième élément est porté par l'utilisateur du premier élément : il s'agit d'un élément permettant d'identifier le porteur du deuxième par le premier élément. Le deuxième élément est en contact physique avec l'utilisateur, par exemple porté à sa ceinture, autour du cou (badge, collier), dans sa montre, l'essentiel étant qu'une communication de type IBC (« Intra Body Communication » en anglais, Communication par le Corps) puisse s'établir entre les deux éléments.

Le principe de fonctionnement est le suivant : le porteur du deuxième élément s'authentifie auprès de ce deuxième élément, par exemple en entrant un code dans l'appareil qui le comprend ou en faisant reconnaître son empreinte digitale. Une fois authentifié, le porteur du deuxième élément entre en contact physique avec l'élément à commander (il touche la souris reliée à l'ordinateur, prend son téléphone portable en main, touche la poignée de la porte de son domicile ou de sa voiture) et une communication est établie entre les premier et deuxième éléments à travers la peau du porteur. Si le premier élément reconnaît le premier (un appairage a été préalablement été réalisé entre les deux éléments), l'ordinateur ou le téléphone portable passe d'un état bloqué à un état débloqué (sans que l'utilisateur n'ait à entrer son mot de passe ou un code PIN), la serrure de son domicile ou de sa voiture se débloque sans qu'il n'ait à utiliser de clé.

Cette communication IBC est ensuite interrompue pour qu'une communication en mode UWB (Ultra Wide Band) soit établie entre les deux éléments. Pendant cette communication UWB, tout appareil qui a authentifié le porteur communique par ondes radio avec le deuxième élément. Ceci permet au porteur de ne pas devoir rester en contact physique avec l'élément à commander (la souris, le téléphone ou la poignée de porte). Le porteur peut rester à proximité de l'élément à commander (jusqu'à environ 20 mètres) sans que celui-ci ne repasse à son état initial (blocage de l'ordinateur ou du téléphone, verrouillage de la serrure). Si le porteur s'éloigne trop de l'élément à commander, la communication UWB est coupée et l'ordinateur ou le téléphone se bloque automatiquement et la porte se verrouille.

Ceci permet au porteur du deuxième élément de s'authentifier automatiquement auprès d'un appareil ou d'une machine (par exemple un distributeur automatique de billets) par simple contact physique.

La présente invention a pour objectif d'appliquer la technologie eGo à la communication entre un terminal de télécommunications et un élément sécurisé déporté, cet élément sécurisé étant destiné à communiquer en mode UWB avec le terminal.

A cet effet, la présente invention propose un système de transmission de données entre un terminal de télécommunication et un élément sécurisé déporté dans lequel le système comprend une interface apte à établir une communication de type UWB entre le terminal et l'élément sécurisé.

L'interface peut se présenter sous différentes formes, par exemple :
- comprendre un élément flexible doté d'un connecteur destiné à entrer en contact électrique avec des contacts électriques correspondants du terminal, ce connecteur étant électriquement relié à un élément de communication relié à une antenne de type UWB ;
- comprendre un élément faisant office de proxy entre le terminal et un élément de communication relié à une antenne de type UWB, cet élément faisant office de proxy étant en contact avec des contacts électriques du terminal et comprenant des moyens de communication courte distance avec l'élément de communication, l'élément de communication étant en contact mécanique avec la coque du terminal ;
- comprendre un élément faisant office de proxy entre le terminal et un élément de communication relié à une antenne de type UWB, l'élément faisant office de proxy étant en contact avec des contacts électriques du terminal et comprenant des moyens de communication courte distance avec l'élément de communication, cet élément de communication étant logé dans une carte extractible destinée à coopérer avec le terminal.

La carte est préférentiellement de format micro-SD.

Les moyens de communication courte distance sont avantageusement de type Bluetooth.

L'élément sécurisé est préférentiellement compris dans un boîtier comprenant un dispositif de type eGo en contact physique avec l'utilisateur du terminal.

Avantageusement, le terminal est un téléphone mobile.

D'autres avantages de la présente invention apparaîtront à la lecture de la description suivante de trois modes de réalisation du système selon l'invention, donnés à titre illustratif et non limitatif, et des dessins annexés dans lesquels :
- La figure 1 représente un système de transmission de données entre un terminal de télécommunication et un élément sécurisé déporté utilisant un des trois modes de réalisation de l'invention ;
- La figure 2 représente un premier mode de réalisation de la présente invention ;
- La figure 3 représente un deuxième mode de réalisation de la présente invention ;
- La figure 4 représente un troisième mode de réalisation de la présente invention.

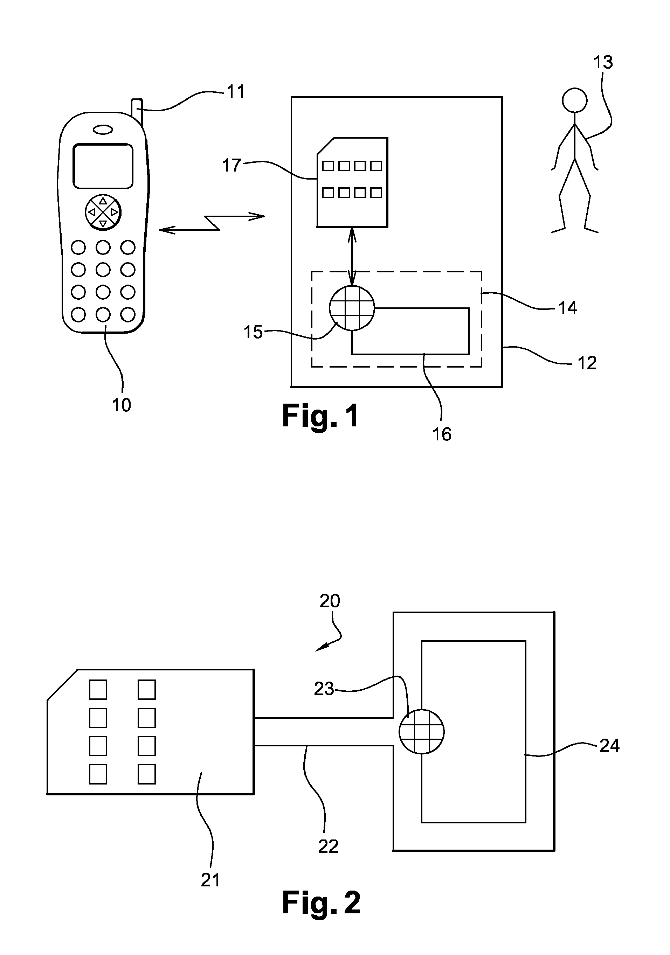

La figure 1 représente un système de transmission de données entre un terminal de télécommunication et un élément sécurisé déporté utilisant un des trois modes de réalisation de l'invention.

Le système représenté comporte un terminal de télécommunications 10, par exemple un téléphone mobile ou un ordinateur fixe ou mobile. Classiquement le terminal 10 comporte une antenne intégrée 11 lui permettant de se connecter au réseau de télécommunications (GSM, 3G, LTE ou autre) grâce à un élément sécurisé. Dans le cadre de la présente invention, l'élément sécurisé, de type SIM ou UICC, n'est pas compris dans le terminal 10, mais est localisé dans un boîtier 12 en contact physique avec l'utilisateur 13 du terminal 10. Le contact physique entre le boîtier 12 et l'utilisateur 13 est destiné à permettre une authentification de type IBC entre le terminal 10 et le boîtier 12 comme il sera vu par la suite.

Le boîtier 12 se présente par exemple sous la forme d'un badge porté par l'utilisateur 13. Il peut également s'agir d'un élément métallique de la taille d'une carte SIM classique (2x3 cm), en contact avec (ou à proximité de) la peau de l'utilisateur 13, par exemple incorporé dans un collier, un bracelet ou une montre, ou alors fixé à une ceinture.

L'élément 12 comprend un dispositif 14 de type eGo, tel que décrit dans le brevet EP-1.695.296. Le dispositif 14 comprend essentiellement une puce 15 coopérant avec une antenne de type UWB 16. La puce 15 communique avec un élément 17 de type UICC qui est déporté du terminal 10.

Le fonctionnement de ce système est le suivant :
L'utilisateur 13 portant sur lui l'élément 12 touche, typiquement avec une de ses mains, le terminal 10. Une communication de type IBC est alors établie entre le terminal 10, qui renferme également un dispositif de type eGo comme il sera vu par la suite, et s'authentifie ainsi auprès du terminal 10. Une fois cette authentification réalisée, une communication de type UWB (ou Bluetooth, voire Wifi par exemple) est établie entre le terminal 10 et l'élément 12. Le terminal 10 communique alors en UWB avec l'élément sécurisé 17 par l'intermédiaire de la puce 15 et de l'antenne 16. On obtient ainsi une liaison sans fil entre le terminal 10 et l'UICC 17. La puce 15 communique via des APDU avec l'élément sécurisé 17.

L'UICC 17 est de préférence de type eUICC, tel que décrit précédemment.

On va maintenant décrire trois types d'interfaces de communication entre le terminal 10 et l'élément sécurisé 17.

La figure 2 représente un premier mode de réalisation de la présente invention.

Dans ce premier mode de réalisation, l'interface comprend un élément flexible 20 doté à l'une de ses extrémités d'un connecteur 21 destiné à entrer en contact électrique avec des contacts électriques correspondants du terminal 10. Le connecteur comporte des plages de contact placées aux mêmes endroits qu'un UICC classique inséré dans un terminal mobile tel qu'un téléphone. Ces plages de contact sont reliées par des fils non représentés s'étendant le long d'une partie centrale 22 du l'élément 20 à un élément de communication 23 relié à une antenne 24 de type UWB. L'élément de communication 23 est de préférence un dispositif de type eGo tel que décrit précédemment. Il peut être appairé avec le dispositif 14 de la figure 1, de sorte qu'une communication de type IBC puis UWB s'établisse entre ces deux éléments. Une antenne 24 est à cet effet (UWB) prévue à l'extrémité opposée à celle du connecteur 21.

L'élément flexible 20 est destiné à être inséré dans un terminal mobile, tel qu'un téléphone mobile. Le connecteur 21 entre en contact avec des contacts ISO correspondants prévus dans le téléphone, la partie centrale 22 est repliée autour de la batterie du téléphone sous laquelle se situent les contacts du téléphone ainsi que le connecteur 21 et l'extrémité à droite de la figure est repliée sur la batterie, sous la coque du téléphone. La coque du téléphone doit présenter une certaine conductivité afin de permettre l'établissement de la communication IBC, par exemple en métal.

Ce premier mode de réalisation permet donc d'établir une liaison sans fil, de préférence de type UWB entre un terminal, par exemple un téléphone mobile, et un eUICC déporté porté par l'utilisateur de ce terminal, sans avoir à modifier le terminal (afin que celui-ci comporte à l'issue de sa fabrication de facto des capacités de communiquer avec un élément sécurisé déporté). L'élément 20 sert de proxy entre le terminal 10 et l'élément sécurisé 17.

La communication UWB peut bien entendu être remplacée par une communication sans fil d'un autre type, par exemple de type Bluetooth ou Wifi entre le terminal 10 et l'élément 14.

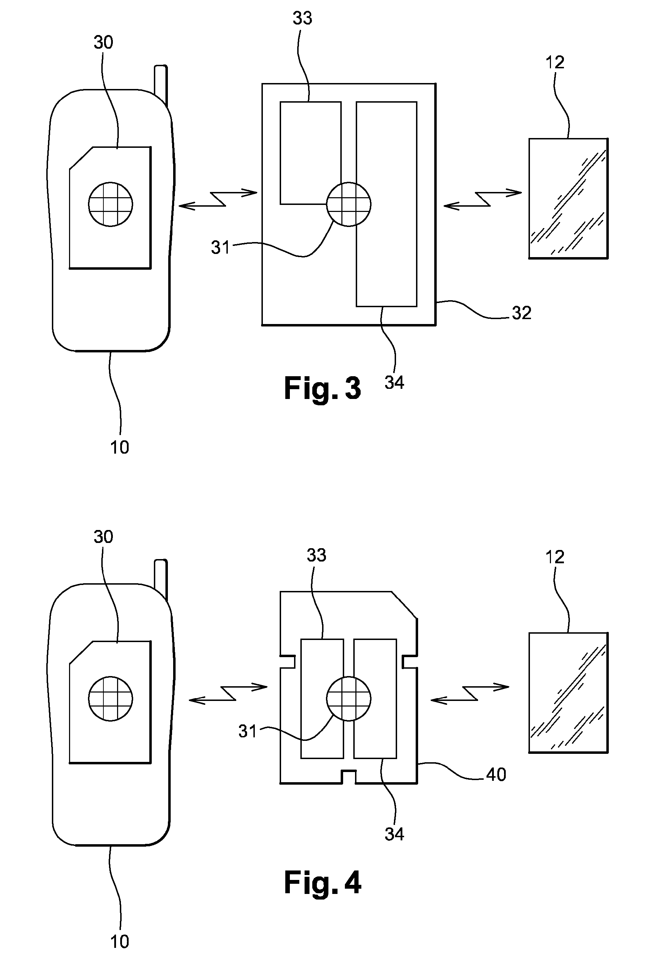

La figure 3 représente un deuxième mode de réalisation de la présente invention.

Cette figure représente le terminal 10 comprenant un élément 30 faisant office de proxy entre le terminal 10 et un élément de communication 31 en contact mécanique avec la coque 32 du terminal 10. La coque 32 est par exemple la coque arrière du terminal 10, celle qui recouvre la batterie. L'élément de communication 31 coopère avec deux antennes, une antenne 33 apte à établir une communication courte distance de type Bluetooth ou Wifi avec le proxy 30, et une antenne 34 de type UWB pour une communication avec l'élément 12 qui comprend un dispositif de type eGo, tel que décrit dans le brevet EP-1.695.296.

L'élément 13 est en contact électrique avec des contacts correspondants prévus dans le terminal 10. Il occupe la place de l'UICC classique. Grâce à sa fonctionnalité de proxy, il communique avec l'élément de communication 31 de type eGo. Si la coque 32 est suffisamment conductrice, un appairage est établi entre l'élément 12 porté par l'utilisateur et l'élément de communication 31 (par liaison IBC, lorsque le porteur de l'élément 12 touche la coque 32 du terminal 10), une liaison UWB est ensuite établie entre ces deux éléments et comme une liaison sans fil existe entre le proxy 30 et l'élément de communication 31, une communication est établie entre le terminal 10 et l'UICC (eUICC) compris dans l'élément 12.

Ceci permet comme dans le cas précédent d'établir une communication entre un terminal et un eUICC déporté. Le porteur de l'eUICC sera authentifié par le réseau avec lequel le terminal communique et le système de facturation débitera son compte. Une généralisation d'un tel système permet à tout à chacun de prêter son terminal à un tiers, sachant que ce sera le compte du tiers qui sera débité des unités de communication.

La figure 4 représente un troisième mode de réalisation de la présente invention.

Ce mode de réalisation s'applique aux terminaux disposant d'un emplacement pour une carte mémoire extractible, telle qu'une carte SD ou micro-SD par exemple. Ce mode de réalisation est similaire au précédent dans la mesure où il utilise un élément faisant office de proxy dans le terminal. Comme montré sur la figure 4, l'élément 30 faisant office de proxy est inséré dans le terminal, à la place de la carte UICC. L'élément de communication de type eGo est ici non pas fixé sur la coque du terminal mais est présent sur une carte 40 de format micro-SD par exemple. La carte 40 comporte une antenne 33 destinée à communiquer avec le proxy 30 et une antenne 34 destinée à communiquer avec l'élément 12 porté par l'utilisateur. La puce de type eGo assure la communication entre le proxy 30 et l'élément eGo 12. L'élément de communication 31 est donc logé dans une carte 40 extractible destinée à coopérer avec le terminal 10.

Comme précédemment, la communication entre le proxy 30 et la carte 40 est de type Bluetooth par exemple, alors que la communication entre la carte 40 et l'élément 12 est de type UWB. La carte 40 peut comporter de la mémoire, par exemple pour y stocker des photos.

Ce troisième mode de réalisation réservé aux terminaux pourvus d'emplacement pour cartes mémoire extractibles permet de ne pas changer la coque du terminal, par exemple d'un téléphone mobile, et de ne pas avoir à loger un flexible dans le terminal.

Les différents modes de réalisation présentés précédemment permettent d'établir des communications entre des terminaux et des eUICC déportés par simple contact physique entre le porteur d'un élément eGo et un terminal qui aura été rendu compatible eGo, soit à l'aide d'un élément flexible tel que décrit en référence à la figure 2, soit à l'aide d'une coque tel que décrit en référence à la figure 3, soit à l'aide d'une carte de format micro-SD tel que décrit en référence à la figure 4. Il n'y a donc pas de modification du terminal en lui-même et le fabricant du terminal n'a rien à changer à son procédé de fabrication.

## Revendications

1. Système de transmission de données entre un terminal de télécommunication (10) et un élément sécurisé déporté (17), **caractérisé en ce que** ledit système comprend une interface (20, 32, 40) apte à établir une communication de type UWB entre ledit terminal (10) et ledit élément sécurisé (17).

2. Système selon la revendication 1, **caractérisé en ce que** ladite interface comprend un élément flexible (20) doté d'un connecteur (21) destiné à entrer en contact électrique avec des contacts électriques correspondants dudit terminal (10), ledit connecteur (21) étant électriquement relié à un élément de communication (23) relié à une antenne (24) de type UWB.

3. Système selon la revendication 1, **caractérisé en ce que** ladite interface comprend un élément (30) faisant office de proxy entre ledit terminal (10) et un élément de communication (31) relié à une antenne (34) de type UWB, ledit élément (30) faisant office de proxy étant en contact avec des contacts électriques dudit terminal (10) et comprenant des moyens de communication courte distance avec ledit élément de communication (31), ledit élément de communication (31) étant en contact mécanique avec la coque (32) dudit terminal (10).

4. Système selon la revendication 1, **caractérisé en ce que** ladite interface comprend un élément (30) faisant office de proxy entre ledit terminal (10) et un élément de communication (31) relié à une antenne (34) de type UWB, ledit élément (30) faisant office de proxy étant en contact avec des contacts électriques dudit terminal (10) et comprenant des moyens de communication courte distance avec ledit élément de communication (31), ledit élément de communication étant logé dans une carte (40) extractible destinée à coopérer avec ledit terminal (10).

5. Système selon la revendication 4, **caractérisé en ce que** ladite carte (40) est de format micro-SD.

6. Système selon l'une des revendications 1 à 3, **caractérisé en ce que** lesdits moyens de communication courte distance sont de type Bluetooth.

7. Système selon l'une des revendications 1 à 6, **caractérisé en ce que** ledit élément sécurisé (17) est compris dans un boîtier (12) comprenant un dispositif de type eGo en contact physique avec l'utilisateur (13) dudit terminal (10).

8. Système selon l'une des revendications 1 à 7, **caractérisé en ce que** ledit terminal (10) est un téléphone mobile.
